# EUROPEAN PATENT APPLICATION

(11) **EP 1 496 717 A2**
(43) Date of publication of application: **12.01.2005**
(21) Application number: 04015955.0
(22) Date of filing: 07.07.2004
(51) Int. Cl.: H04Q 7/36

(54) **Service-driven network planning method**

(30) Priority: 10.07.2003 US 616851
(71) Applicant: ALCATEL, 75008 Paris (FR)
(72) Inventor: Power, Gerard L., Plano TX 75075 (US)
(74) Representative: Dreiss, Fuhlendorf, Steimle & Becker

(57) **Abstract**

A method for forecasting future telecommunications network growth so as to maximize carrier profitability. The method being a service-driven network planning method for more accurately forecasting the future equipment needs of telecommunications carriers. A plurality of different service forecasts are utilized to create a network model. These forecasts are translated into bandwidth flows and modeled as they traverse the network. An amalgamation of these flows is translated into equipment needs and existing equipment is subtracted from the needs to result in a long-term equipment needs forecast. Financial metrics that model the carrier business plan are also employed to generate a forecasted profit and loss statement. With such a statement, long-term strategic issues that will impact carrier performance and profitability can be identified.

## Description

### FIELD OF THE INVENTION

This invention relates to a service-driven network planning method. It makes use of financial metrics and capacity forecasting. It is a strategic planning tool especially useful for anticipating future trends in the telecommunications industry and can be used to anticipate future network growth and equipment expenditures.

### BACKGROUND OF THE INVENTION

Forecasting future needs in any industry is essential to business. In the telecommunications industry, important forecasts include future subscriber growth and network carrier equipment needs.

Telecommunication companies historically have used analyst estimations of subscriber growth to predict equipment needs. Telecommunications equipment manufacturers have used those predictions to predict potential sales. These analyst estimations are normally based upon a business model unique to a specific telecommunications carrier and upon restricted data. Because telecommunications networks in general are becoming much more complex and interdependent and because the analyses of the prior art did not consider all the network interactions, the accuracy of such forecasts based upon the analysts' estimations is wanting.

Network modeling exercises are an extremely important aspect to any type of network planning exercise and are thus essential to forecasts. Modeling allows a carrier to consider a status quo situation and compare one or more alternate scenarios. Comparative results can then be produced and alternate options can be ranked in terms of attractiveness to the carrier.

The network modeling process can range anywhere from extremely straightforward to extremely complicated. Simple network models minimize the data collected and the number of variables utilized. As more data is considered and more variables utilized and adjusted, the complexity of the model begins to increase exponentially.

Simple and complex models both have their drawbacks. Simple models suffer in that often variables that have not been considered can completely invalidate the results of the model. For example, a first-cost equipment model does not consider the effects of operational costs, which, over time, often are more significant that initial hardware costs. Complex models suffer because with increased complexity comes increased probability that the model itself is errored.

Modeling exercises start with a set of assumed data parameters. Relationships between data and mathematical formulas are made to derive a newly inferred data set. Conclusions are then drawn from the inferred data set. Network planners should have an understanding of how the model was put together, the data that was used to drive the results, and assumptions that are inherent in that modeling exercise before accepting the results of any modeling exercise.

The present invention relates to a service-driven network planning method that takes into account the various interdependencies of the telecommunications network. Service forecasts are calculated and translated into bandwidth flows. These bandwidth flows are translated into equipment needs in a modeled network. A profit and loss statement is also generated. When variables are altered, the profit and loss statement is altered. This allows a network to be modeled to maximize projected profitability. The previous analyst estimations of the prior art did not translate service forecasts into bandwidth flows, translate these flows into equipment demands in a modeled network, or generate profit and loss statements based upon the modeled network.

The present invention would provide a telecommunications company improved visibility of long-term product demands in advance of the general industry. This method permits a network carrier to better plan its network growth to maximize profitability. It enables an equipment manufacturer to have improved visibility of network carrier performance flex points and to use that information to affect marketing efforts to better address concerns of its customers, the network carriers.

Thus, a need exists for a service-driven network planning method that is more accurate than previous analyst forecasts by taking into account network interdependencies and translating service forecasts into bandwidth flows and translating such bandwidth flows into equipment needs in a modeled network and permitting carriers to forecast the most profitable network model.

### SUMMARY OF THE INVENTION

The present invention relates to a service-driven network planning method for more accurately forecasting the future equipment needs of telecommunications carriers. A plurality of different service forecasts are utilized to create a network model. These forecasts are translated into bandwidth flows and modeled as they traverse the network. An amalgamation of these flows is translated into equipment needs in the modeled network. Existing equipment is then subtracted from the needs to result in a long-term equipment needs forecast. The service forecasts and network model information is translated into financial metrics that model the carrier business plan. A forecast profit and loss statement is generated. Through this information, long-term strategic issues that will impact carrier performance and profitability can be identified.

The present invention has many advantages over the prior art. It provides much more accurate forecasts of network carriers' long-term equipment demands. It also helps network carriers model future networks to maximize profitability. It also provides improved visibility of carrier performance flex points to assist marketing efforts of equipment manufacturers to better target network carrier concerns.

An embodiment of the present invention provides a method for forecasting future network equipment needs.

An embodiment of the present invention provides a method for forecasting carrier equipment expenditures.

An embodiment of the present invention provides a method for forecasting long-term strategic issues impacting carrier performance.

An embodiment of the present invention provides a method for modeling future network growth to maximize carrier profitability.

As such, it is an object of the present invention to provide for the forecasting of future network equipment needs.

It is another object of the present invention to provide for the forecasting of carrier equipment expenditures.

It is yet another object of the present invention to provide for the forecasting of long-term strategic issues impacting carrier performance.

It is yet another object of the present invention to provide for modeling future network growth to maximize carrier profitability.

### BRIEF DESCRIPTION OF THE DRAWINGS

Figure 1 is a block diagram depicting a process flow of a service-driven network planning method according to an embodiment of the present invention.

Figure 2 is a flow chart depicting a service demand calculation process according to an embodiment of the present invention.

Figure 3 is a flow chart depicting a network architecture modeling process according to an embodiment of the present invention.

### DESCRIPTION OF THE PREFERRED EMBODIMENTS

The present invention will be better understood by reference to the accompanying drawings.

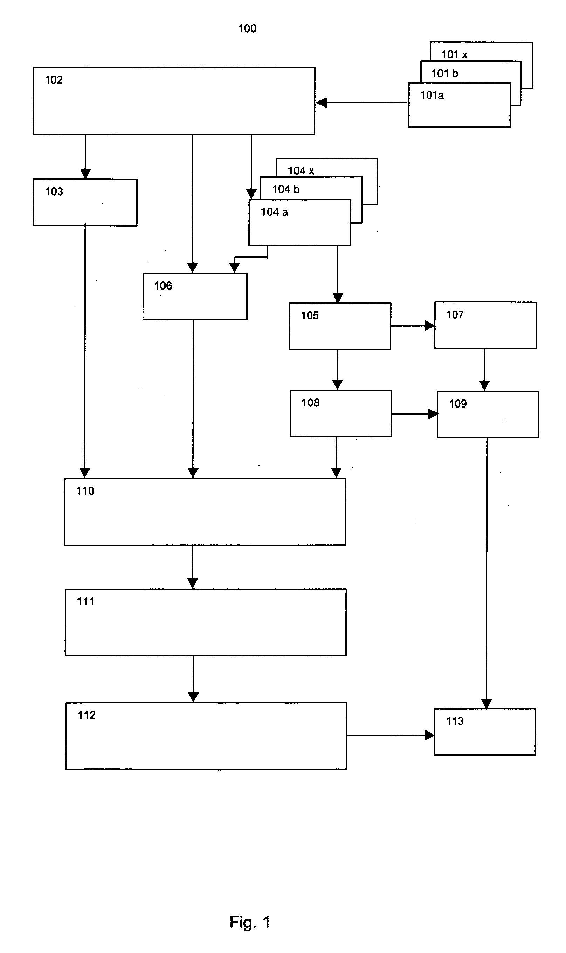

Referring now to Figure 1, service-driven network planning method 100 is shown. Preferably, a wide range of data sources are used for the method 100 including, for example, academia, multiple consulting organizations, multiple financial analysts, subject matter experts, in-house business planning groups and centralized in-house staff. These sources are used to gather data for placement in a database that is utilized in an embodiment of the present invention. Such data may include historical and forecast data relating to the following, for example: nationwide service demands; network elements within the nationwide network; network element prices and service revenue; census-type data indicating numbers of businesses and residences or business and residential services served by different types of networks, e.g., rural, suburban and urban; and network element interconnections in the nationwide network.

Forecasting method 100 of the present invention is preferably substantially automated. This method can be implemented as a software program on top of Excel. The details of how to compose such a program will be readily apparent to one skilled in the art.

Parameters 101a are entered into method 100. Different or additional parameters 101b-101x can be entered to view different affects of variables upon the results of method 100. These parameters preferably include at least a current number of access lines in the carrier's network. Additionally, they can include the network application, such as rural, urban, or a network composite average, as well as a utilization threshold (discussed in more detail below).

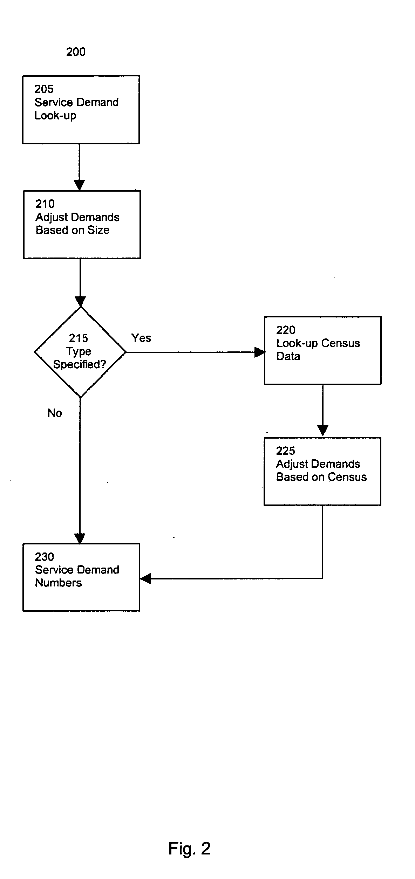

Entered parameters, e.g., at least some of parameters 101a, are utilized by method 100 to perform a demand analysis of various wireline services to predict service demands 102. Such services may be the thirteen key wire-line services. These services include business voice (which can be broken down into UNE, retail primary and retail secondary, if desired), residential voice (which can be broken down into UNE, retail primary, and retail secondary, if desired), cellular interconnection, frame-relay, ATM, DSL, SMDS, IP/VPN, Ethernet (which can be broken down into Gig-E, 10/100 and other, if desired), ISDN (which can be broken down into basic rate and primary rate, if desired), DS1 leased lines, DS3 leased lines, and OC-n leased lines. Additionally, some non-wire-line service demands, such as cellular, cable modem and dial-up ISP service data, are also preferably considered. While the prime focus is on wire-line services, the data pertaining to these non-wire-line services is needed to estimate the wire-line support infrastructure needed to support such ancillary services in a modeled network. The process of determining service demands 102 is more fully discussed hereinafter with respect to Figure 2.

Service demands 102 are then applied against a revenue model to determine the carrier's long-term revenue forecast 103. Each service is preferably characterized in terms of monthly fixed revenue, monthly variable revenue, and installation revenue. Service demand data 102, coupled with churn rate statistics, are used to generate commissioning and decommissioning rates for each service.

Service demand data 102 also drives bandwidth through a traffic flow model to determine a modeled network architecture, modeled network architecture 104a, for example. By changing parameters, parameters 101b for example, different model network architectures can be derived, modeled network architecture 104b, for example.

In the generation of a modeled network architecture, traffic is compressed and switched as it flows through successive network elements of various types between the source and destination of a service. Network elements in the modeled network are of course distributed between local serving offices, area hub offices, and core network nodes. The embedded network element quantities and inter-relationships are preferably based on actual network data. As in actual networks, the modeled network handles optical, packet-based, and voice based traffic.

One of the parameters 101a that is used during the generation of the modeled network architecture 104a is a utilization threshold. The utilization threshold is a limit to the utilization of each network element in the modeled network. This utilization threshold can be a percentage of capacity, a number of subscribers, a traffic volume, or the like. Through the use of the utilization threshold, one can generate a model network that is in accordance with a network carrier's business plan. If desired, different utilization thresholds may be used for different types of network elements.

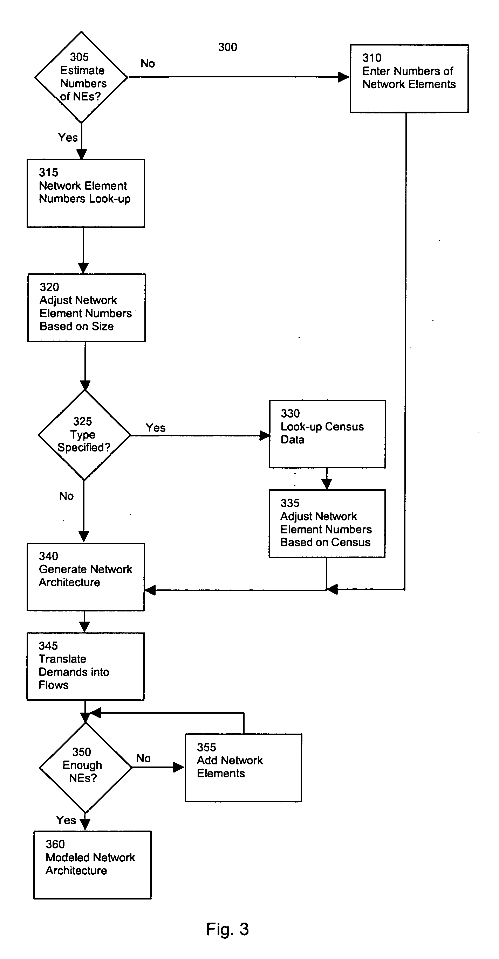

The modeled network architecture 104a of the present invention contains a set of network parameters preferably driven by national or regional network averages at central office locations. At the onset of the modeling process, parameters 101a, such as number of wire-line subscribers and the network application, e.g., rural, urban, or a composite average, are used to generate the model network structure. These initial parameters 101a are used to statistically generate a large list of network defaults. Each of the network behavior defaults can be adjusted by entering new or additional parameters 102b, for example, to reflect specific characteristics of the modeled network, if desired. The process of generating the modeled network architecture 104a is more fully described hereinafter with respect to Figure 3.

Service demands 102 and modeled network architecture, 104a e.g., are used to forecast operating expenses 106. Service demands 102 are used to derive provisioning costs, service maintenance costs, and deprovisioning costs. Changes in the network architecture from the actual current network architecture to modeled network architecture 104a are used to forecast installation costs and network maintenance costs including both alarm-triggered and scheduled preventative maintenance. Operating expenses typically peaks on service introduction, settles, and then grows with demand, reflecting increasing labor costs.

The modeled network architecture, for example modeled network architecture 104a, is also used to calculate projected capital expenditures 105. Long-term network element demand growth (and thus long range capital expenditure demands) are driven by the utilization thresholds established per network element. If a utilization threshold is set higher, capital expenditures 105 will thus be lower.

Since the current network model focuses on growth of new services, but does not inject new network elements for unforeseen network services, capital expenditures growth patterns show high initial requirements with diminishing requirements as the network is built out.

Capital expenditures 105 is then depreciated over multiple years to yield capital expense depreciation 106. Capital expenditures 105 is also used to calculate increase in plant assets 109 by subtracting existing plant assets from plant assets needed in the modeled network architecture, for example modeled network architecture 104a.

Capital expense depreciation 106 and increase in plant assets 107 are then used to calculate a reduction in plant assets 109.

Revenue projection 103, operating expenses 106 and capital expense depreciation 108 are then used to calculate operating income 110.

Other expenses 111, such as support costs for network planning, sales, marketing, and management are calculated based on revenue 103 and headcount need expenses are determined based upon operating expenses 106. These other expenses 111 are subtracted from operating income 110 to generate a net income. This data is summed into a generated profit and loss statement 112, including a cash flow forecast.

Increase in plant assets 107 and reduction in current assets 109 and net income (shown on the balance sheet as new assets) from profit and loss statement 112 are used to predict the net change in assets needed 113.

Referring now to Figure 2, the service demand forecast calculation process 200 for calculating service demands 102 according to an embodiment of the present invention is described in more detail. In step 205, a database containing service demand data, that may include historical and forecasted data on a nationwide basis, is accessed to retrieve the numbers for the period of time being addressed by the method 100.

In step 210, one of the entered parameters 101a-101x that addressed the size of the service area being covered by the forecast, in terms of the number of access lines, for example, is taken and utilized to form a ratio that is applied to the nationwide numbers retrieved in step 210. This ratio adjusts the service demand data to reflect the appropriate size of the service area being addressed.

In step 215, it is determined if one of the parameters 101a entered specified the network-type, such as rural, suburban or urban. If not, the nationwide average number as was adjusted in step 210 is utilized to result in the service demands 102 in step 230.

If the network type was specified, the database is accessed in step 220 to retrieve appropriate census-type data indicating the numbers of businesses and residences representative of the type of network, e.g., rural. This data is utilized in step 225 to further adjust the demand data so as to yield the service demands 102, in step 230.

Referring now to Figure 3, the network architecture modeling process 300 used to generate the modeled network architecture 104a, e.g., is discussed in more detail. In step 305, it is determined if the number of network elements in the modeled existing network covering the service are are to be estimated. If not, the user enters the number of network elements in step 310 and this information is used to generate the modeled existing network architecture in step 340. The generation of the modeled existing network architecture includes a look-up in the database to determine how the network elements are to be interconnected based upon nationwide network interconnection data.

If an estimation is desired, the process accesses a database in step 315 to retrieve numbers of network elements on a nationwide basis.

In step 320, one of the entered parameters 101a that addressed the size of the service area being covered by the forecast, in terms of the number of access lines, for example, is taken and utilized to form a ratio that is applied to the nationwide numbers retrieved in step 315. This ratio adjusts the number of network elements to reflect the appropriate size of the modeled existing network.

In step 325, it is determined if one of the parameters 101a entered specified the network as rural, suburban or urban. If not, the nationwide average number as adjusted in step 320 is utilized to generate the network model architecture in step 340.

If a type of network was specified, the database is consulted in step 330 to retrieve appropriate census-type data indicating the numbers of businesses and residences representative of the type of network, e.g., rural. This data is utilized in step 335 to further adjust the network element data. This further adjusted data is then used to generate the modeled existing network architecture in step 340.

In step 345, the service demands 102 are translated into bandwidth flows and traffic flows at each network element as they go through the modeled existing network. To convert the service demand to a bandwidth flow one needs to consider the physical rate of the service multiplied by the number of service demands (subscribers) multiplied by the probability of a demand request (erlang). As a particular service matures over time the probability of a service being active will tend to increase according to product life cycle curves.Commingled bandwidth is aggregated up onto trunks in a fashion that depends on the operational characteristics of the network element involved using algorithms. The details of how to develop these traffic flows based upon the operational characteristics of the different network elements would be apparent to those skilled in the network modeling art. The network model is built by serially outlining the network elements traversed by each service flow. At each network element the flows are compressed and/or switched based on the mathematical characteristics of the machines. For example a digital cross connect does not compress data but does switch traffic flows. In the case of a digital cross connect, (number of inputs) x (speed of inputs) = (number of outputs) x (speed of outputs). A packet switch, in contrast, is able to receive multiple flows, merge them, and remove idle slots from the composite flow. Thus composite packet flow can be described by (number of inputs) x (speed of inputs) x (probability of utilization) = (number of outputs) x (speed of output).

In step 350, it is determined if the modeled existing network architecture can handle the bandwidth flows. The utilization threshold, if entered as one of the parameters 104a, is herein applied. If the modeled existing network architecture cannot handle the bandwidth flows, additional network elements are added until the modeled network architecture handle the flows. If desired, the costs for those additional network elements can be entered by a user or they can be retrieved from the database.

Once the modeled network can handle the bandwidth flows, a modeled network architecture 104a results in step 360.

It is noted that the steps set forth in procedures 200 and 300 may vary from the order set forth in Figs. 2 and 3, respectively. Those of skill in the art would clearly recognize that there is flexibility in the ordering of some of these steps. Moreover, the processes may be run once taking all the service demands 102 at once, or run several times taking them separately or in groups. These and other variations of the illustrative processes will become apparent to one of ordinary skill in the art having had the benefit of the present disclosure.

Additionally, data generated by the processes may be altered by a user. For instance, with respect to the service demand calculation process 200 of Figure 2, the service demands generated 102 may be altered if desired to reflect the view of the user. Also for instance, with respect to the network architecture modeling process 300 of Figure 3, it is understood that the actual existing network architecture could be entered rather than undertaking steps 305-340 or the modeled existing network architecture 340 could be altered to more accurately reflect the actual existing network architecture. Moreover, the modeled network architecture 104a can be altered to generate other modeled network architectures 104b-104x.

The method of the present invention produces predictions for network growth in terms of bandwidth-demand total. It also produces a long-term revenue forecast, a capital expenditures forecast, and an operating expenses forecast for the carrier owning the network. These forecasts are brought together in a profit and loss forecast for the carrier that includes a cash-flow analysis. The method is intended to predict how changes in marketing (e.g. demand or price changes), operations, or network structure affect long-term valuation of the network carrier. When applied against a carrier's strategic goals, the method supports a gap analysis to determine long-term direction options for the carrier. In general, the method operates for a selected time span and allows data characterization of an existing embedded base of network elements. Thus, by introducing changes to variables, such as variables 101a, a carrier can forecast how various changes will affect its profitability. This permits carriers to make marketing, operations and network structure determinations based on data in order to maximize profitability. It also permits equipment manufacturers to better understand carrier performance flex points and to adjust their marketing strategy accordingly.

### The following features are further features of the invention; these features may be of importance as separate features as well as in combination:

- determining a net change in network elements based upon a capital expenditures forecast, a capital expense depreciation forecast and a net income forecast,
- generating a forecasted profit and loss statement,
- said forecasted profit and loss statement comprises a cash flow analysis.

### The following method is a further method of the invention:

A method for forecasting profitability of a network carrier utilizing at least one network model having a plurality of network elements comprising the steps of: estimating demand for a plurality of services to be provided by a network over a period of time; estimating bandwidth flows for each of said plurality of services; determining a network model comprising a plurality of network elements based upon said estimated bandwidth flows and a utilization threshold per network element; forecasting network growth over said period of time based upon said network model and current network resources; generating a forecasted profit and loss statement based upon said demand for said plurality of services and said network model.

### The following features are further features of the invention; these features may be of importance as separate features as well as in combination:

- determining if a network growth is financially feasible based upon a forecasted profit and loss statement,
- forecasting operating expenses over a period of time based upon a demand for a plurality of services and a network model; and forecasting capital expenditures over said period of time based upon said network model,
- forecasting revenue; forecasting operating income based upon a revenue forecast, said operating expenses forecast and said capital expenditures forecast; forecasting other expenses; and generating a forecast net income,
- the described methods are substantially automated.
   Although the preferred embodiments of the present invention have been described and illustrated in detail, it will be evident to those skilled in the art that various modifications and changes may be made thereto without departing from the spirit and scope of the invention as set forth in the appended claims and equivalents thereof.

## Claims

1. A method for network planning, comprising the steps of:
estimating demand for a plurality of services to be provided by a network over a period of time;
translating said demand for said plurality of services into required bandwidth flows to determine network elements that may be used in said network over said period of time to provide said plurality of services; and
forecasting network growth over said period of time based upon said determination of network elements that may be used and current network resources.

2. A method as in claim 1, wherein said translating step comprises:
setting a utilization threshold per network element;
estimating bandwidth flows for each of said plurality of services;
determining said network elements that may be used based upon said estimated bandwidth flows and said utilization threshold; and
generating a network model comprising said network elements that may be used.

3. A method as in claim 1, further comprising the steps of:
forecasting operating expenses over said period of time based upon said demand for said plurality of services and said determination of network elements that may be used; and
forecasting capital expenditures over said period of time based upon said determination of network elements that may be used.

4. A method as in claim 3, further comprising the step of forecasting revenue based upon said demand for said plurality of services.

5. A method as in claim 4, further comprising the step of depreciating said capital expenditures forecast to generate a capital expense depreciation forecast.

6. A method as in claim 5, further comprising the step of forecasting an income based upon factors including said operating expenses forecast, said capital expenditures forecast, and said capital expense depreciation forecast.

7. A method as in claim 6, further comprising the step of determining a net change in network elements based upon said capital expenditures forecast, said capital expense depreciation forecast and said income forecast.
